# EUROPEAN PATENT APPLICATION

(11) **EP 4 635 888 A1**
(43) Date of publication of application: **22.10.2025**
(21) Application number: 25169042.6
(22) Date of filing: 08.04.2025
(51) Int. Cl.: B66B 1/30, B66B 1/32, B66B 5/02

(54) **SCALABLE ARCHITECTURE FOR SAFE TORQUE OFF AND SAFE BRAKE CONTROL**

(30) Priority: 15.04.2024 US 202418635579
(71) Applicant: Otis Elevator Company, Farmington, Connecticut 06032 (US)
(72) Inventor: Noon, John, Farmington, 06032 (US); Millett, Steven Michael, Farmington, 06032 (US); Nagarajan, Prasanna, Farmington, 06032 (US); Tilahun, Selamsew, Farmington, 06032 (US)
(74) Representative: Schmitt-Nilson Schraud Waibel Wohlfrom Patentanwälte Partnerschaft mbB

(57) **Abstract**

A control system for safe torque off (STO) operation and safe brake control (SBC) operation is provided, including a motor, a brake and a drive safety interface board (DSIB) including a first portion of a first circuitry for accomplishing the STO operation a first portion of a second circuitry for accomplishing the SBC operation and a monitoring circuitry for monitoring the STO and SBC operations.

## Description

The present disclosure relates to elevator systems and, in particular, to an elevator system with safe torque off (STO) and safe brake control (SBC).

In an elevator system, an elevator shaft is built into a building and an elevator car travels up and down along the elevator shaft to arrive at landing doors of different floors of the building. The movement of the elevator is driven by a machine that is controlled by a controller according to instructions received from users of the elevator system.

According to an aspect of the disclosure, a control system for safe torque off (STO) operation and safe brake control (SBC) operation, including a motor, a brake, and a drive safety interface board (DSIB) including a first portion of a first circuitry for accomplishing the STO operation, a first portion of a second circuitry for accomplishing the SBC operation, and a monitoring circuitry for monitoring the STO and SBC operations.

Particular embodiments further may include at least one, or a plurality of, the following optional features, alone or in combination with each other:

In accordance with additional or alternative embodiments, the DSIB is disposed on a single printed circuit board (PCB), and the first portion of the first circuitry, the first portion of the second circuitry and the monitoring circuitry are disposed on the single PCB.

In accordance with additional or alternative embodiments, the motor is rotatable in accordance with a command signal issued by the first circuitry, and the brake includes a brake element configured to prevent motor rotation and brake circuitry disposed separately from the DSIB, the brake circuitry being controllable by the first portion of the second circuitry and configured to control the brake element.

In accordance with additional or alternative embodiments, a second portion of the first circuitry includes a gate driver power supply configured to be cut off.

In accordance with additional or alternative embodiments, the second portion of the first circuitry further includes a digital signal processor (DSP), an inverter to combine low side and high side pulse width modulation (PWM) signals output by the DSP into a high-voltage output to control the motor, and a digital isolator electrically interposed between the DSP and the inverter and configured to selectively block at least a portion of the high side PWM signals from being received by the inverter.

In accordance with additional or alternative embodiments, a second portion of the second circuitry includes first and second switches in series and configured to selectively block power to the brake.

In accordance with additional or alternative embodiments, the first switch is electrically closer to a brake coil power source than the second switch and includes at least one of a semiconductor switch, a contactor and a relay.

In accordance with additional or alternative embodiments, the second switch is electrically closer to a brake coil than the first switch and includes at least one of a contactor and a relay.

In accordance with additional or alternative embodiments, the monitoring circuitry includes a first microcontroller configured to monitor first components of the first and second circuitry, and a second microcontroller configured to monitor second components of the first and second circuitry.

According to an aspect of the disclosure, a control system for safe torque off (STO) and safe brake control (SBC) operations, including a motor, a brake, and a drive safety interface board (DSIB) including a first portion of a first circuitry for accomplishing the STO operation, the first circuitry including a second portion separate from the DSIB and including a gate driver power supply configured to be cut off and a digital isolator to selectively block at least a portion of high side pulse width modulation (PWM) signals for driving the motor, a first portion of a second circuitry for accomplishing the SBC operation, the second circuitry including a second portion separate from the DSIB and including first and second switches to selectively block power to the brake, and a monitoring circuitry including a first microcontroller for monitoring the gate driver power supply and the first switch and a second microcontroller for monitoring the digital isolator and the second switch.

Particular embodiments further may include at least one, or a plurality of, the following optional features, alone or in combination with each other:

In accordance with additional or alternative embodiments, the DSIB is disposed on a single printed circuit board (PCB), and the first portion of the first circuitry, the first portion of the second circuitry and the monitoring circuitry are disposed on the single PCB.

In accordance with additional or alternative embodiments, the motor is rotatable in accordance with a command signal issued by the first circuitry, and the brake includes a brake element configured to prevent motor rotation and brake circuitry disposed separately from the DSIB, the brake circuitry being controllable by the first portion of the second circuitry and configured to control the brake element.

In accordance with additional or alternative embodiments, the first portion of the first circuitry further includes a digital signal processor (DSP), and an inverter to combine low side PWM signals and the high side PWM signals, which are output by the DSP, into a high-voltage output to control the motor, and a digital isolator electrically interposed between the DSP and the inverter and configured to selectively block at least a portion of the high side PWM signals from being received by the inverter.

In accordance with additional or alternative embodiments, the first switch is electrically closer to a brake coil power source than the second switch and includes at least one of a semiconductor switch, a contactor and a relay.

In accordance with additional or alternative embodiments, the second switch is electrically closer to a brake coil than the first switch and includes at least one of a contactor and a relay.

According to an aspect of the disclosure, a method of controlling safe torque off (STO) operation and safe brake control (SBC) of an elevator system, the method including arranging a portion of a first circuitry, a portion of a second circuitry and a monitoring circuitry on a drive safety interface board (DSIB), accomplishing the STO operation by the portion of the first circuitry by at least one of cutting off gate driver power and selectively blocking at least a portion of high side pulse width modulation (PWM) signals for controlling a motor, accomplishing the SBC operation by the portion of the second circuitry by selectively blocking power to a brake by first and second switches, monitoring the cutting off of the gate driver power and the first switch by the monitoring circuitry, and monitoring the selectively blocking of the at least the portion of the high side PWM signals and the second switch by the monitoring circuitry.

Particular embodiments further may include at least one, or a plurality of, the following optional features, alone or in combination with each other:

In accordance with additional or alternative embodiments, further including disposing the DSIB on a single printed circuit board (PCB).

In accordance with additional or alternative embodiments, a second portion of the first circuitry is separate from the DSIB and includes a gate driver power supply configured to be cut off by the first portion of the first circuitry, and a digital isolator configured to execute the selectively blocking of at least the portion of the high side PWM signals.

In accordance with additional or alternative embodiments, the first and second switches are separate from the DSIB and the first switch is electrically closer to a brake coil power source than the second switch and includes at least one of a semiconductor switch, a contactor and a relay, and the second switch is electrically closer to a brake coil than the first switch and includes at least one of a contactor and a relay.

In accordance with additional or alternative embodiments, the monitoring circuitry includes a first microcontroller to monitor the cutting off of gate driver and the first switch, and a second microcontroller to monitor the selectively blocking of at least a portion of the high side PWM signals and the second switch.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

For a more complete understanding of this disclosure, reference is now made to the following brief description, taken in connection with the accompanying drawings and detailed description, wherein like reference numerals represent like parts:
FIG. 1 is a perspective view of an elevator system in accordance with embodiments;
FIG. 2 is a schematic view of an elevator control system in accordance with embodiments;
FIG. 3 is a schematic view of an elevator control system in accordance with embodiments;
FIG. 4 is a flow diagram illustrating a method of controlling safe torque off (STO) operation of an elevator system in accordance with embodiments;
FIG. 5 is a schematic diagram of an elevator control system for safe torque off (STO) operation and safe brake control (SBC) operation in accordance with embodiments;
FIG. 6 is a flow diagram illustrating a method of controlling safe torque off (STO) operation and safe brake control (SBC) of an elevator system in accordance with embodiments;
FIG. 7 is a schematic diagram of an elevator control system for safe brake control (SBC) in accordance with embodiments;
FIG. 8 is a schematic diagram of an elevator control system for safe brake control (SBC) in accordance with embodiments; and
FIG. 9 is a flow diagram illustrating a method of controlling safe brake control (SBC) of an elevator system in accordance with embodiments.

In certain jurisdictions, operation of elevator systems requires a continuous flow of current to hold off the brake. The code states that in order to accomplish this, the following shall be met: (1) the interruption of current, initiated by an electric safety device, shall be made by one of the following means: (a) electrical circuit, or an SIL-rated circuit fulfilling SIL 3 requirements, with a hardware fault tolerance of at least 1 and PFH ≤ 2,5*10-8 or directly by the electrical safety device, provided it is suitably rated electrically; (2) current shall not be applied to the brake until the motor has been powered except during manual or automatic rescue operation and (3) where the electromechanical brake is part of the means to stop the car, a separate switching element additionally to a) shall be used to control the brake current during normal operation.

To meet the requirements noted above, an interlocking electromechanical circuit with hardware fault tolerance of at least two or a SIL3 solution needs to be implemented for SBC. The SIL3 solution is generally preferred due to lower costs. However, a minimal number of boards should be certified to be SIL3 compliant, and they should be able to apply to all drive systems. Therefore, a key technical challenge is to develop an SIL3 certifiable solution that is scalable across whole drive portfolios.

Thus, as will be described below, a system and method are provided for application of a scalable architecture to implement STO and SBC across elevator motor drive portfolios. By only disconnecting top switches, the scalable architecture allows for active short circuit of the lower three switches. The scalable architecture allows a sensor, a logical element and an actuator of SIL3 STO and SBC functions to be implemented on one board. All monitoring functions are implemented on one board which minimizes the burden of integrating this solution with previously designed drives. This effectively keeps all the components that do not change with the power level of the drive and brakes on one board while leveraging the drive and brake boards to contain the components that change as the power level of the drive increases. This provides a cost optimal solution for the high-volume drives without leading to a cost penalty on the higher power drives.

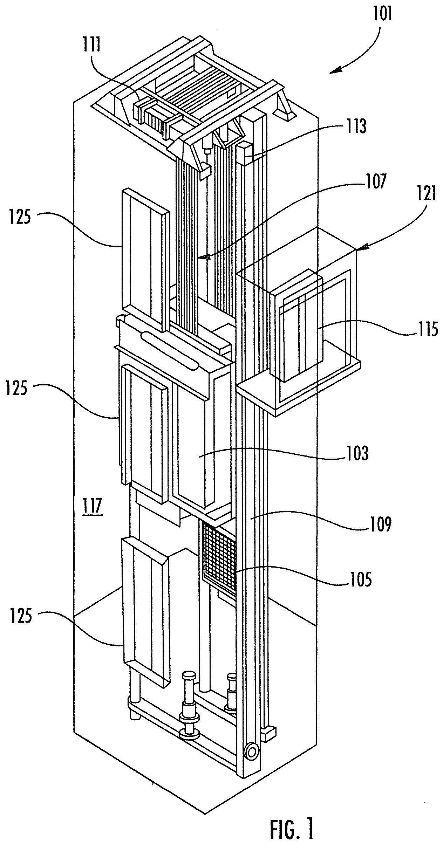

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor is a variable speed drive, which may be commonly referred to as a drive. As understood by those skilled in the art, the drive includes several electrical circuits such as an inverter, rectification stage, filtering and control circuitry towards the purpose of controlling the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

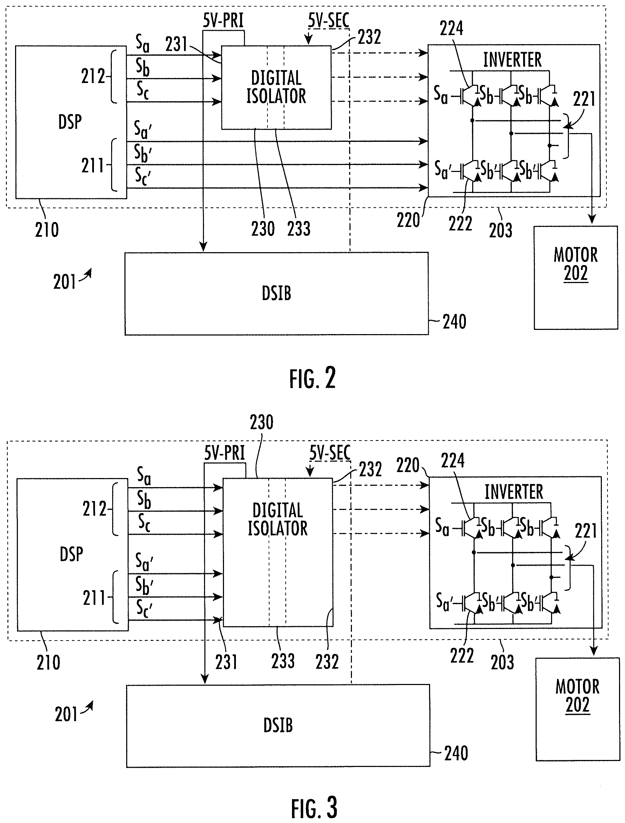

With continued reference to FIG. 1 and with additional reference to FIG. 2, an elevator control system 201 is provided for providing STO operation at least for the elevator system 101 of FIG. 1. The elevator control system 201 includes an inverter 220 and a motor 202, such as that of the machine 111 of FIG. 1, a digital signal processor (DSP) 210, a digital isolator 230 and a drive safety interface board (DSIB) 240 that controls certain operations of the DSP 210. The motor 202 is rotatable in accordance with a multi-phase high-voltage output 221 to raise or lower an elevator car, such as the elevator car 103 of FIG. 1. The DSP 210 outputs a multi-phase low side pulse width modulation (PWM) signal 211 (hereinafter referred to as a "multi-phase low side PWM signal 211") and a multi-phase high side PWM signal 212 (hereinafter referred to as a "multi-phase high side PWM signal 212") as gate signals toward the inverter 220, which are synthesized into the multi-phase high-voltage output 221 by the inverter 220. The inverter 220 is electrically interposed between the DSP 210 and the motor 202 and is receptive of the multi-phase low side PWM signal 211 and the multi-phase high side PWM signal 212. The inverter 220 is configured to combine the multi-phase low side PWM signal 211 and the multi-phase high side PWM signal 212 into the multi-phase high-voltage output 221 to control and for commanding operations of the motor 202. The digital isolator 230 is electrically interposed between the DSP 210 and the inverter 220. The digital isolator 230 is configured to selectively block at least a portion of the multi-phase high side PWM signal 212 from being received by the inverter 220. Although not required, the DSP 210, the digital isolator 230 and the inverter 220 can all be disposed with monitoring circuitry on the same printed circuit board (PCB) 203. It is to be understood that in this context, the term "DSP" is used as a generic term where it may mean a digital signal processor, a microcontroller unit, or any other processor configured to control the gate signals of the inverter.

The digital isolator 230 can include a first side 231 with multiple inputs, a second side 232 with multiple outputs, which is opposite the first side 231, and a central isolation region 233 in which at least the portion of the multi-phase high side PWM signal 212 is blocked.

When the digital isolator 230 under the control of the DSIB 240 selectively blocks at least the portion of the multi-phase high side PWM signal 212 due, for example, to STO operation being determined to be in effect, the inverter 220 is prevented from combining the multi-phase low side PWM signal 211 and the multi-phase high side PWM signal 212 into the multi-phase high-voltage output 221 and in turn the motor 202 is prevented from rotating.

In accordance with embodiments, the multi-phase low side PWM signal 211 can be provided as three-phase low side PWM signals Sₐ', S_{b}' and S_{c}' and the multi-phase high side PWM signal 212 can be provided as three-phase high side PWM signals Sₐ, S_{b} and S_{c}. The following description will relate to these embodiments. This is being done for clarity and brevity and is not intended to otherwise limit the scope of the following description or the claims.

In the exemplary cases in which the multi-phase low side PWM signal 211 is provided as the three-phase low side PWM signals Sₐ', S_{b}' and S_{c}' and the multi-phase high side PWM signal 212 is provided as the three-phase high side PWM signals Sₐ, S_{b} and S_{c}, the inverter 220 can include first, second and third switches 222 for each phase component of the three-phase low side PWM signals Sₐ', S_{b}' and S_{c}' and first, second and third switches 224 for each phase component of the three-phase high side PWM signals Sₐ, S_{b} and S_{c}.

Those skilled in the art will appreciate that the DSP 210 may control both switches 222 and 224 with a single set of three PWM signals from the DSP 210 via additional circuitry, such as gate drivers, and that embodiments may exist where only the subset of these signals required to prevent torque is blocked.

In accordance with further embodiments, in the exemplary cases in which the multi-phase low side PWM signal 211 is provided as the three-phase low side PWM signals Sₐ', S_{b}' and S_{c}' and the multi-phase high side PWM signal 212 is provided as the three-phase high side PWM signals Sₐ, S_{b} and S_{c}, the digital isolator 230 can be configured to block two of the three phase components of the three-phase high side PWM signals Sₐ, S_{b} and S_{c} from being received by the inverter 220 or to block all three of the three phase components of the three-phase high side PWM signals Sₐ, S_{b} and S_{c} from being received by the inverter 220.

In general, a number of the three phase components of the three-phase high side PWM signals Sₐ, S_{b} and S_{c} that should be blocked by the digital isolator 230 is defined such that a number of the three phase components of the three-phase high side PWM signals Sₐ, S_{b} and S_{c} that are not blocked are insufficient to cause the motor 202 to rotate (i.e., blocking two phase components is sufficient but blocking only one phase component may not be sufficient). Embodiments may exist, however, in which a lesser number (i.e., only one out of three) of the phase components can be blocked especially in cases in which the unblocked phase components are otherwise amplitude and/or frequency modulated.

It is to be further understood that the multi-phase low side PWM signal 211 can be provided with more than three phase components and that the multi-phase high side PWM signal 212 can be provided with more than three phase components. In these cases, as above, a number of the multiple phase components of the multi-phase high side PWM signal 212 that should be blocked by the digital isolator 230 is defined such that a number of the multiple phase components of the multi-phase high side PWM signal 212 that are not blocked are insufficient to cause the motor 202 to rotate.

In addition, it is also to be further understood that the inverter 220 is described herein as a two-level inverter 220 but may be replaced with a multi-level inverter. In these or other cases, the digital isolator 230 would be configured to block a number of PWM signals such that a number of the multiple phase components of the multi-phase high side PWM signal 212 that are not blocked are insufficient to cause the motor 202 to rotate.

With reference to FIG. 3 and in accordance with additional further embodiments, in the exemplary cases in which the multi-phase low side PWM signal 211 is provided as the three-phase low side PWM signals Sₐ', S_{b}' and S_{c}' and the multi-phase high side PWM signal 212 is provided as the three-phase high side PWM signals Sₐ, S_{b} and S_{c}, the digital isolator 230 can be further configured to block one, two or all three of the three phase components of the three-phase low side PWM signals Sₐ', S_{b}' and S_{c}' from being received by the inverter 220. This can add to system redundancy, for example.

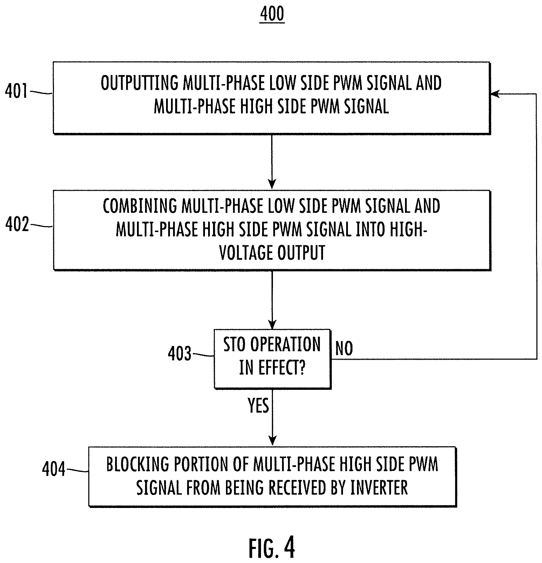

With reference to FIG. 4, a method 400 of controlling STO operation of an elevator system, such as the elevator system 101 of FIG. 1, is provided. The method 400 includes outputting, from a DSP (i.e., the DSP 210 of FIGS. 2 and 3), a multi-phase low side PWM signal and a multi-phase high side PWM signal (block 401) and combining, in an inverter (i.e., the inverter 220 of FIGS. 2 and 3), the multi-phase low side PWM signal and the multi-phase high side PWM signal into a multi-phase high-voltage output to control and for commanding operations of a motor (block 402). The method 400 further includes determining that the STO operation is in effect (block 403) and blocking, at a digital isolator electrically interposed between the DSP and the inverter (i.e., the digital isolator 230 of FIGS. 2 and 3), at least a portion of the multi-phase high side PWM signal from being received by the inverter (block 404). As noted above, the blocking of block 404 can include blocking, at the digital isolator, all or at least a portion of the phase components of the multi-phase high side PWM signal from being received by the inverter.

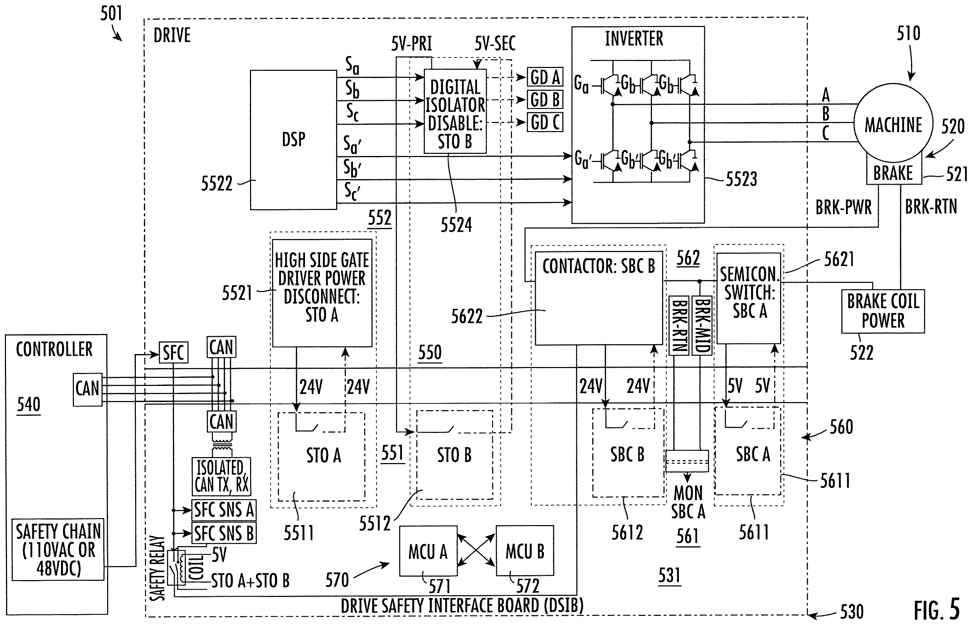

With reference to FIG. 5, an elevator control system 501 is provided for STO operation and for SBC operation of an elevator system, such as the elevator system 101 of FIG. 1. The elevator control system 501 includes a motor 510, a brake 520, a drive safety interface board (DSIB) 530 and a controller 540 (i.e., the controller 115 of FIG. 1) to control certain operations of the DSIB 530. The DSIB 530 is provided on a single PCB 531 and includes a first portion 551 of first circuitry 550, a first portion 561 of second circuitry 560 and monitoring circuitry 570. The first portion 551 of the first circuitry 550, the first portion 561 of the second circuitry 560 and the monitoring circuitry 570 are all disposed on the DSIB 530 provided as the single PCB 531. The first circuitry 550 also includes a second portion 552 that is separate from the DSIB 530 and the second circuitry 560 also includes a second portion 562 that is separate from the DSIB 530.

The motor 510 is rotatable in accordance with a high-voltage three-phase output of the first circuitry 550 to raise or lower an elevator car, such as the elevator car 103 of FIG. 1. The brake 520 includes a brake element 521, such as a brake coil, and brake circuitry 522 including a power source for the brake element 521. The brake 521 is configured to prevent rotation of the motor 510. The brake circuitry 522 is disposed separately from the DSIB 530 and the single PCB 531, which allows for scaling of the elevator control system 501. The power to the brake element 521 by the brake circuitry 522 is controlled by the second circuitry 560.

The first circuitry 550 is provided for accomplishing the STO operation and includes certain elements (i.e., the first portion 551 of the first circuitry 550) that are all provided on the DSIB 530 and certain elements (i.e., the second portion 552 of the first circuitry 550) that are not provided on the DSIB 530. The first portion 551 of the first circuitry 550 includes a first control element 5511 and the second portion 552 of the first circuitry 550 includes a second control element 5512. The second portion 552 of the first circuitry 550 includes a gate driver power supply 5521 whose output power is disconnected by the first control element 5511 to prevent torque from being applied to the motor 510. The gate driver power supply 5521 is at least partially controllable by the first control element 5511. The second portion 552 of the first circuitry 550 further includes a DSP 5522, an inverter 5523 and a digital isolator 5524 substantially as described above with the digital isolator 5524 being configured to selectively block at least a portion of high side PWM signals for controlling and for driving operations of the motor 510. The digital isolator 5524 is at least partially controllable by the second control element 5512.

The second circuitry 560 is provided for accomplishing the SBC operation and includes certain elements (i.e., the first portion 561 of the second circuitry 560) that are all provided on the DSIB and certain elements (i.e., the second portion 562 of the second circuitry 560) that are not provided on the DSIB 530. The first portion 561 of the second circuitry 560 on the DSIB 530 includes a first control element 5611 and a second control element 5612. The second portion 562 of the second circuitry 560 includes a first switch 5621, which is partially controlled by the first control element 5611, and a second switch 5622, which is partially controlled by the second control element 5612. The first and second switches 5621 and 5622 are separate from the DSIB 530. The first switch 5621 and the second switch 5622 are disposed in series with the first switch 5621 being electrically closer to the power source of the brake circuitry 522 than the second switch 5622 and with the second switch 5622 being electrically closer to the brake element 521 than the first switch 5621. The first switch 5621 can include or be provided as one of a semiconductor switch, a contactor and a relay. The second switch 5622 can include or be provided as one of a contactor and a relay. When the first switch 5621 and the second switch 5622 are both closed by the first and second control elements 5611 and 5612, electrical power is provided from the power source of the brake circuitry 522 to the brake element 521. When either of the first switch 5621 and the second switch 5622 are opened by the first and second control elements 5611 and 5612, electrical power is prevented from being provided from the power source of the brake circuitry 522 to the brake element 521.

The arrangement of the first and second switches 5621 and 5622 is provided to allow for testing. With the second switch 5622 open, operations of the first switch 5621 can be tested without risk of power being provided to the brake element 521.

The monitoring circuitry 570 is provided for monitoring and, in some cases, controlling the STO and SBC operations by the first and second portions 551 and 552 of the first circuitry 550 and by the first and second portions 561 and 562 of the second circuitry 560, respectively. The monitoring circuitry 570 includes a first microcontroller 571 and a second microcontroller 572, both of which are provided on the DSIB 530. The first microcontroller 571 monitors and, in some cases, controls the gate driver power supply 5521 of the second portion 552 of the first circuitry 550 by way of the first control element 5511 of the first portion 551 of the first circuitry 550 and the first switch 5621 of the second portion 562 of the second circuitry 560 by way of the first control element 5611 of the first portion 561 of the second circuitry 560. The second microcontroller 572 monitors and, in some cases, controls at least the digital isolator 5524 of the second portion 552 of the first circuitry 550 by way of the second control element 5512 of the first portion 551 of the first circuitry 550 and the second switch 5622 of the second portion 562 of the second circuitry 560 by way of the second control element 5612 of the first portion 561 of the second circuitry 560.

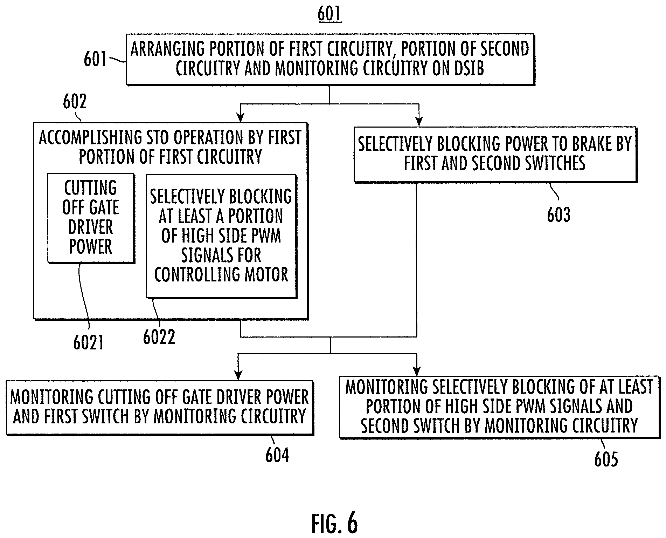

With reference to FIG. 6, a method 600 of controlling STO operation and SBC of an elevator system, such as the elevator system 101 of FIG. 1, is provided. The method 600 includes arranging a portion of first circuitry, a portion of second circuitry and monitoring and control circuitry on a DSIB (block 601). The method 600 also includes parallel operations of accomplishing the STO operation by the portion of the first circuitry (block 602) by at least one of cutting off gate driver power (block 6021) and selectively blocking at least a portion of high-side PWM signals for controlling and driving a motor (block 6022) and accomplishing the SBC operation by the portion of the second circuitry by selectively blocking power to a brake by first and second switches (block 603). In addition, the method 600 includes parallel operations of monitoring the cutting off of the gate driver power and the first switch by the monitoring circuitry (block 604) and monitoring the selectively blocking of at least the portion of the high side PWM signals and the second switch by the monitoring circuitry (block 605).

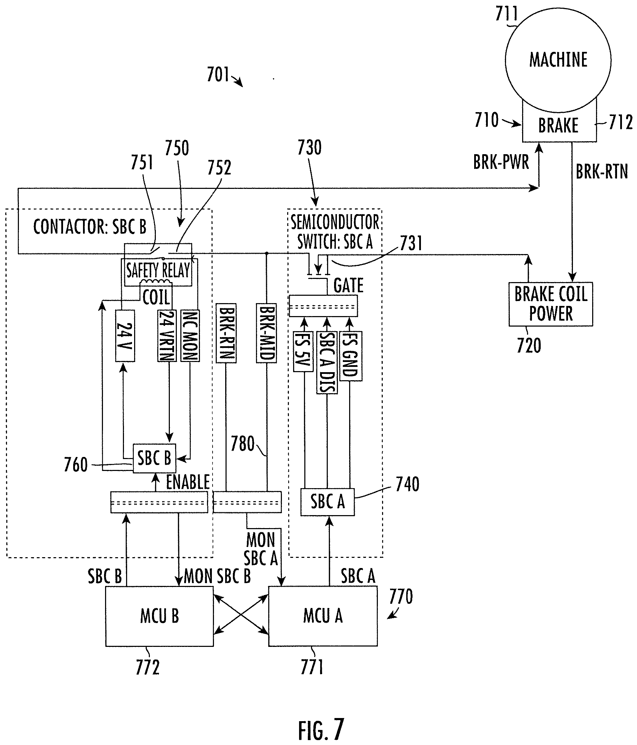

With reference to FIG. 7, an elevator control system 701 for SBC operation is provided for an elevator system, such as the elevator system 101 of FIG. 1. The elevator control system 701 includes a brake element 710, a power source 720 for operating the brake element 710, a semiconductor switch 730, a first switch control element 740, an electromechanical switch 750 and a second switch control element 760. The brake element 710 is configured to prevent rotation of a motor 711 for raising or lowering an elevator car, such as the elevator car 103 of FIG. 1, and includes a brake coil 712.

The semiconductor switch 730 can include or be provided as a transistor 731 and is electrically interposed between the power source 720 and the brake element 710. The first switch control element 740 is configured to control operations of the semiconductor switch 730. The electromechanical switch 750 has normally open main contacts 751 and normally closed force guided auxiliary contacts 752 and can include or be provided as at least one of a contactor and a relay. The electromechanical switch 750 is electrically interposed between the semiconductor switch 730 and the brake element 710. The second switch control element 760 is configured to control operations of the electromechanical switch 750. The semiconductor switch 730 is thus electrically closer to the power source 720 than the electromechanical switch 750 and the electromechanical switch 750 is thus electrically closer to the brake coil 712 than the semiconductor switch 730.

The above-noted arrangement is non-intuitive, as the semiconductor switch 730 opens before the electromechanical switch 750. However, the above-noted arrangement does allow the semiconductor switch 730 to be tested while the electromechanical switch 750 remains open, ensuring a safe state. Since the electromechanical switch 750 has the normally closed contacts 752 the electromechanical switch 750 does not need to be tested in the same manner as the semiconductor switch 730.

The elevator control system 701 can also include monitoring circuitry 770 to monitor and control operations of the semiconductor switch 730 and the electromechanical switch 750 and a feedback line 780. The monitoring circuitry 770 can include a first microcontroller 771 and a second microcontroller 772. The first microcontroller 771 is configured to monitor and control operations of the semiconductor switch 730 via at least the first switch control element 740. The second microcontroller 772 is configured to monitor and control operations of the electromechanical switch 750 via the second switch control element 760. The feedback line 780 is disposed downstream from the semiconductor switch 730 and upstream from the electromechanical switch 750 and is connected to the first microcontroller 771 whereby the first microcontroller 771 can monitor testing results and operations of the semiconductor switch 730.

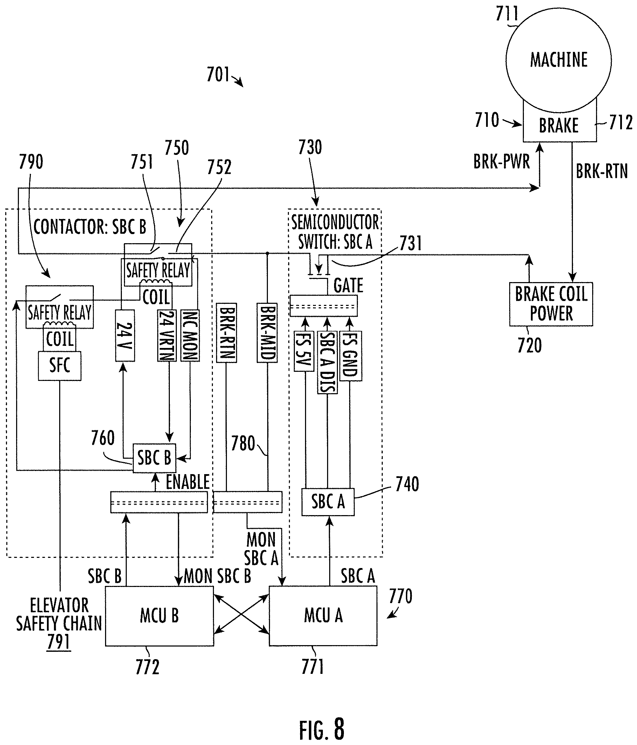

With reference to FIG. 8, the elevator control system 701 can further include an additional electromechanical switch 790. The additional electromechanical switch 790 is disposed in series with and is downstream from the electromechanical switch 750. The additional electromechanical switch 790 is communicative with the second switch control element 760 and is receptive of power from an elevator safety chain 791.

The additional electromechanical switch 790 is added for an additional margin of safety. The elevator safety chain 791 is the input to the drive safety system and is sensed by the DSIB (see above) in order for the first microcontroller 771 and the second microcontroller 772 to control the first and second switch control elements 740 and 760, respectively. Using the elevator safety chain 791 to control the additional electromechanical switch 790 (i.e., a coil of a relay) in series with the electromechanical switch 750 provides an additional margin of safety in the control system.

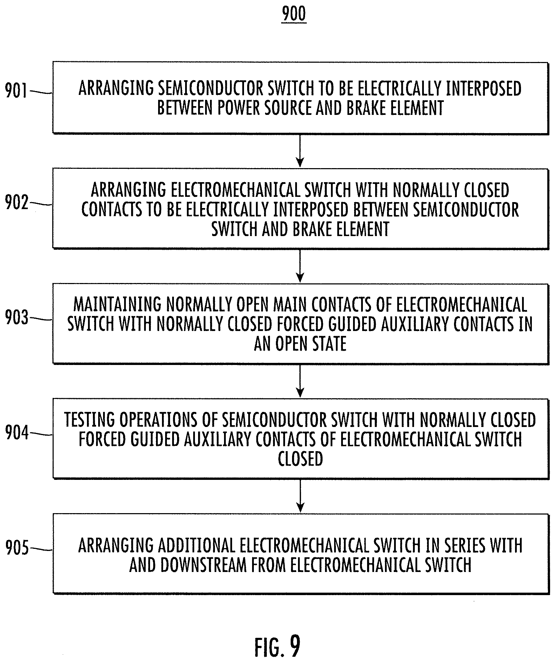

With reference to FIG. 9, a method 900 of controlling SBC of an elevator system is provided for an elevator system, such as the elevator system 101 of FIG. 1. The method 900 includes arranging a semiconductor switch to be electrically interposed between a power source and a brake element (block 901), arranging an electromechanical switch with normally closed force guided auxiliary contacts to be electrically interposed between the semiconductor switch and the brake element (block 902), maintaining the normally open main contacts of the electromechanical switch with normally closed force guided auxiliary contacts in an open state (block 903) and testing operations of the semiconductor switch with the normally closed force guided auxiliary contacts of the electromechanical switch closed (block 904). The method 900 can further include arranging an additional electromechanical switch in series with and downstream from the electromechanical switch (block 905) where the additional electromechanical switch is communicative with the second control element and is receptive of power from an elevator safety chain.

Technical effects and benefits of the present disclosure are the provision of an elevator system with scalable architecture and ease of integration into existing motor drives. While prior solutions primarily address STO, which is relatively power-invariant across motor drive portfolios, the present disclosure integrates SBC in a scalable fashion. This allows for a cost-optimal solution while minimizing certification, integration and supply chain challenges.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A control system for safe torque off (STO) operation and safe brake control (SBC) operation, comprising:
a motor;
a brake; and
a drive safety interface board (DSIB) comprising:
a first portion of a first circuitry for accomplishing the STO operation;
a first portion of a second circuitry for accomplishing the SBC operation; and
a monitoring circuitry for monitoring the STO and SBC operations.

2. The control system according to claim 1, wherein:
the DSIB is disposed on a single printed circuit board (PCB), and
the first portion of the first circuitry, the first portion of the second circuitry and the monitoring circuitry are disposed on the single PCB.

3. The control system according to claim 1 or 2, wherein:
the motor is rotatable in accordance with a command signal issued by the first circuitry, and
the brake comprises a brake element configured to prevent motor rotation and brake circuitry disposed separately from the DSIB,
the brake circuitry being controllable by the first portion of the second circuitry and configured to control the brake element.

4. The control system according to any of claims 1 to 3, wherein a second portion of the first circuitry comprises a gate driver power supply configured to be cut off by the first portion of the first circuitry.

5. The control system according to claim 4, wherein the second portion of the first circuitry further comprises:
a digital signal processor (DSP);
an inverter to combine low side and high side pulse width modulation (PWM) signals output by the DSP into a high-voltage output to control the motor; and
a digital isolator electrically interposed between the DSP and the inverter and configured to selectively block at least a portion of the high side PWM signals from being received by the inverter.

6. The control system according to any of claims 1 to 5, wherein a second portion of the second circuitry comprises first and second switches in series and configured to selectively block power to the brake.

7. The control system according to claim 6, wherein the first switch is electrically closer to a brake coil power source than the second switch and comprises at least one of a semiconductor switch, a contactor and a relay.

8. The control system according to claim 6 or 7, wherein the second switch is electrically closer to a brake coil than the first switch and comprises at least one of a contactor and a relay.

9. The control system according to any of claims 1 to 8, wherein the monitoring circuitry comprises:
a first microcontroller configured to monitor first components of the first and second circuitry; and
a second microcontroller configured to monitor second components of the first and second circuitry.

10. The control system according to any of claims 1 to 9, wherein:
the first circuitry for accomplishing the STO operation comprises a second portion separate from the DSIB and comprising a gate driver power supply configured to be cut off by the first portion of the first circuitry and a digital isolator to selectively block at least a portion of high side pulse width modulation (PWM) signals for driving the motor;
the second circuitry for accomplishing the SBC operation comprises a second portion separate from the DSIB and comprising first and second switches to selectively block power to the brake; and
the monitoring circuitry comprises a first microcontroller for monitoring the gate driver power supply and the first switch and a second microcontroller for monitoring the digital isolator and the second switch.

11. The control system according to claim 10, wherein the first portion of the first circuitry further comprises:
a digital signal processor (DSP); and
an inverter to combine low side PWM signals and the high side PWM signals, which are output by the DSP, into a high-voltage output to control the motor; and
a digital isolator electrically interposed between the DSP and the inverter and configured to selectively block at least a portion of the high side PWM signals from being received by the inverter.

12. The control system according to claim 10 or 11, wherein the first switch is electrically closer to a brake coil power source than the second switch and comprises at least one of a semiconductor switch, a contactor and a relay; and/or wherein the second switch is electrically closer to a brake coil than the first switch and comprises at least one of a contactor and a relay.

13. A method of controlling safe torque off (STO) operation and safe brake control (SBC) of an elevator system, the method comprising:
arranging a portion of a first circuitry, a portion of a second circuitry and a monitoring circuitry on a drive safety interface board (DSIB);
accomplishing the STO operation by the portion of the first circuitry by at least one of cutting off gate driver power and selectively blocking at least a portion of high side pulse width modulation (PWM) signals for controlling a motor;
accomplishing the SBC operation by the portion of the second circuitry by selectively blocking power to a brake by first and second switches;
monitoring the cutting off of the gate driver power and the first switch by the monitoring circuitry; and
monitoring the selectively blocking of at least the portion of the high side PWM signals and the second switch by the monitoring circuitry. further comprising disposing the DSIB on a single printed circuit board (PCB).

14. The method according to claim 13,
further comprising disposing the DSIB on a single printed circuit board (PCB); and/or
wherein a second portion of the first circuitry is separate from the DSIB and comprises:
a power disconnect switch configured to remove gate driver power; and
a digital isolator configured to execute the selectively blocking of the at least the portion of the high side PWM signals.

15. The method according to claim 13 or 14,
wherein the first and second switches are separate from the DSIB and:
the first switch is electrically closer to a brake coil power source than the second switch and comprises at least one of a semiconductor switch, a contactor and a relay, and
the second switch is electrically closer to a brake coil than the first switch and comprises at least one of a contactor and a relay; and/or
wherein the monitoring circuitry comprises:
a first microcontroller to monitor the cutting off of gate driver and the first switch; and
a second microcontroller to monitor the selectively blocking of the at least the portion of the high side PWM signals and the second switch.
